# EUROPÄISCHE PATENTANMELDUNG

(11) **EP 0 911 620 A2**
(43) Veröffentlichungstag der Anmeldung: **28.04.1999**
(21) Anmeldenummer: 98116873.5
(22) Anmeldetag: 07.09.1998
(51) Int. Cl.: G01J 3/28

(54) **Detektoreinrichtung zur Verwendung in der Atomabsorptionsspektroskopie**

(30) Priorität: 12.09.1997 DE 19740211
(71) Anmelder: BODENSEEWERK PERKIN-ELMER GMBH, D-88662 Überlingen (DE)
(72) Erfinder: Radziuk, Bernhard, Dr., 88699 Frickingen (DE); Rödel, Günter, 88696 Owingen (DE)
(74) Vertreter: Grünecker, Kinkeldey, Stockmair & Schwanhäusser Anwaltssozietät

(57) **Zusammenfassung**

Die Erfindung betrifft eine photoelektrische Detektoreinrichtung zur Verwendung in der Atomabsorptionsspektroskopie. Sie zeichnet sich aus durch ein Photohalbleiterfeld mit einer Mehrzahl von Photohalbleitereinrichtungen und eine Ausleseeinrichtung zum gemeinsamen Auslesen der in den Photohalbleitereinrichtungen eines beliebigen zusammenhängenden Bereichs im Photohalbleiterfeld durch Auftreffen von Strahlung erzeugten Ladungen sowie zum Erzeugen elektrischer, den ausgelesenen Ladungen entsprechender Signale.

## Beschreibung

Die vorliegende Erfindung betrifft eine photoelektrische Detektoreinrichtung zur Verwendung in der Atomabsorptionsspektroskopie.

Derartige photoelektrische Detektoreinrichtungen sind auf dem Gebiet der Atomabsorptionsspektroskopie, beispielsweise in Form von Photohalbleitereinrichtungen, bekannt.

Die Photohalbleitereinrichtungen in einer derartigen Detektoreinrichtung können in Form von Photodioden, von CCD-Strukturen oder dergleichen vorliegen.

Das Signal/Rauschverhältnis derartiger bekannter Detektoreinrichtungen hängt allerdings von dem Anteil der Detektorfläche, die tatsächlich mit einer zu detektierenden Strahlung beaufschlagt wird, ab. Insbesondere ergibt sich damit ein verschlechtertes Signal/Rauschverhältnis, wenn nicht die gesamte Detektorfläche, sondern nur ein kleiner Teil derselben mit der zu detektierenden Strahlung beaufschlagt wird.

Die der Erfindung zugrunde liegende Aufgabe ist es daher, die bekannte photelektrische Detektoreinrichtung zu verbessern.

Diese Aufgabe wird durch eine Detektoreinrichtungen gelöst, die sich auszeichnet durch ein Photohalbleiterfeldfeld mit einer Mehrzahl von Photohalbleitereinrichtungen, und eine Ausleseeinrichtung zum gemeinsamen Auslesen der in den Photohalbleitereinrichtungen eines beliebigen zusammenhängenden Bereichs im Photohalbleiterfeld durch Auftreffen von Strahlung erzeugten Ladungen sowie zum Erzeugen elektrischer, den ausgelesenen Ladungen entsprechender Signale.

Durch eine derartig ausgebildete Detektoreinrichtung können mittels der Ausleseeinrichtung nur die in einem beliebigen zusammenhängenden Bereich des Photohalbleiterfeldes durch auftreffende Strahlung erzeugten Ladungen ausgelesen werden. Dadurch ist es möglich, jeweils nur Ladungen aus dem Teil des Photodetektors, auf den die nachzuweisende oder zu messende Strahlung tatsächlich auftrifft, auszulesen. Die Bereiche, die in den bekannten Detektoren einen hohen Beitrag zum Signal/Rauschverhältnis liefern, also die Bereiche, die kein Meßsignal liefern sondern lediglich zu einem Ausleserauschen führen, werden demnach von der Ausleseeinrichtung nicht berücksichtigt.

Entsprechend einer vorteilhaften Weiterbildung umfaßt die Detektoreinrichtung eine Mehrzahl von Eingängen, die jeweils einer Photohalbleitereinrichtung des Photohalbleiterfeldes zugeordnet sind, einen Ausgang für die erzeugten, den ausgelesenen Ladungen entsprechenden elektrischen Signale, eine Schaltereinrichtung mit wenigstens einem Schalter, der wenigstens einem Eingang zugeordnet ist, wobei jeder Schalter nach jedem ihm zugeordneten Eingang vorgesehen ist, und durch jeden Schalter jeder ihm zugeordnete Eingang an den Ausgang der Ausleseeinrichtung koppelbar ist.

Durch diese Ausgestaltung, die nur einfache elektronische Bauelemente umfaßt, kann die Erfindung besonders kostengünstig realisiert werden.

Entsprechend einer weiteren Ausführung kann ein Schalter mehreren Eingängen zugeordnet werden. Da diese Ausführung weniger Bauteile benötigt, ist sie insbesondere vorteilhaft, wenn das Photohalbleiterfeld symmetrisch in bezug auf eine Achse aufgebaut ist und die Fläche der Detektoreinrichtung nur symmetrisch in bezug auf diese Achse vergrößert bzw. verkleinert werden soll.

Jeder Schalter der Schaltereinrichtung kann vorzugsweise elektrisch betätigbar ausgebildet sein. In diesem Fall läßt sich jeder Schalter schnell und zuverlässig durch der Ausleseeinrichtung zugeführte, elektrische Signale steuern.

In einer vorteilhaften Weiterbildung kann jedem Schalter zusätzlich eine Einrichtung zugeordnet werden, die alle nicht an den Ausgang der Ausleseeinrichtung gekoppelten Photohalbleitereinrichtungen auf ein vorbestimmtes Potential legt. Dadurch werden etwaige Einflüsse von Photohalbleitereinrichtungen, aus denen keine Ladungen ausgelesen werden sollen, auf die Schaltung minimiert.

Hierzu kann beispielsweise jede einem Schalter zugeordnete Einrichtung einen weiteren Schalter aufweisen, der zwischen dem dem Schalter zugeordneten Eingang und dem vorbestimmten Potential so vorgesehen ist, daß er den Eingang, wenn er nicht an den Ausgang der Ausleseeinrichtung gekoppelt ist, an das vorbestimmte Potential koppelt. Weiterhin kann der Schalter und der diesem zugeordnete Schalter durch ein elektrisches Signal, das dem Schalter unmittelbar und dem zugeordneten Schalter über einen Inverter zugeführt wird, betätigbar vorgesehen werden.

Darüber hinaus kann eine Decodereinrichtung vorgesehen werden, die als Anwort auf digitale Auswahlsignale den oder die Schalter betätigt. Hierdurch ist es möglich, auf einfache Weise eine Vielzahl von Schaltern elektronisch, also beispielsweise durch eine Prozessoreinrichtung, zu steuern.

Gemäß einer weiteren vorteilhaften Weiterbildung kann unmittelbar nach jedem Eingang in die Ausleseeinrichtung eine Strombegrenzungseinrichtung, beispielsweise in Form einer Diode vorgesehen werden. Durch eine solche Strombegrenzungseinrichtung wird sichergestellt, daß die Ausleseeinrichtung erst bei Erreichen eines vorbestimmten Schwellwerts anspricht.

Gemäß einer vorteilhaften Weiterbildung umfaßt die Detektoreinrichtung zur Verstärkung der elektrischen Signale der Ausleseeinrichtung eine Verstärkereinrichtung mit einem Operationsverstärker, und einer parallel zu dem Verstärker geschalteten variable Kapazität.

Hierdurch kann der Empfindlichkeitsbereich des Detektors durch Ändern der Kapazität auf einfache Weise eingestellt werden. Durch Wahl des Empfindlichkeitsbereichs in Abhängigkeit von dem zu messenden Signal kann darüber hinaus das Signal/Rauschverhältnis optimiert werden.

Eine solche variable Kapazität kann besonders kostengünstig aus einer Mehrzahl von parallel geschalteten Reihen aus jeweils einem Kondensator und einem Schalter, wobei die Kapazität durch Betätigung wenigstens eines der Schalter veränderbar ist, aufgebaut werden.

Weiterhin kann ein zusätzlicher Schalter parallel zu den Reihen aus jeweils einem Kondensator und einem Schalter vorgesehen werden. Durch diese Maßnahme kann die Integrator-Schaltung aus dem Operationsverstärker und der variablen Kapazität besonders einfach und schnell zurückgesetzt werden.

Entsprechend einer weiteren vorteilhaften Ausbildung kann zur Betätigung der Schalter der variablen Kapazität eine Decodereinrichtung verwendet werden, die die Schalter als Anwort auf digitale Auswahlsignale betätigt. Hierdurch wird ist ein besonders einfaches Ändern der Kapazität in einer Einrichtung mit einer Vielzahl von parallel geschalteten Reihen aus Kondensatoren und Schaltern durch wenige Auswahlsignale möglich.

Weitere Vorteile der Erfindung ergeben sich aus der folgenden, beispielhaften Beschreibung bevorzugter Ausführungsformen der Erfindung unter Bezugnahme auf die Zeichnung. In der Zeichnung zeigen:
- Fig. 1: eine Detektionseinrichtung gemäß einer ersten Ausführungsform der Erfindung,
- Fig. 2: eine Detektionseinrichtung gemäß einer zweiten Ausführungsform der Erfindung,
- Fig. 3: eine Detektionseinrichtung gemäß einer dritten Ausführungsform der Erfindung,
- Fig. 4A und B: eine Detektionseinrichtung gemäß einer vierten Ausführungsform der Erfindung.

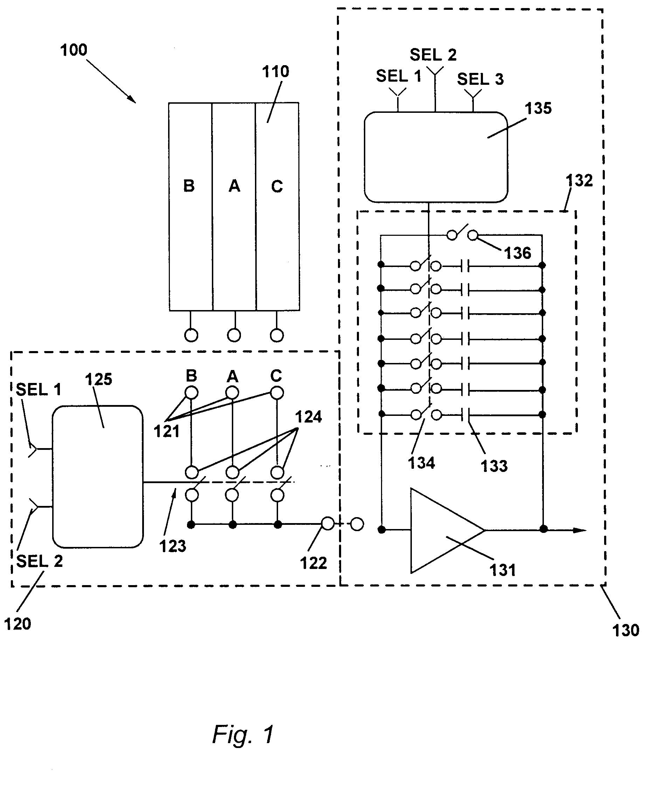

In Fig. 1 ist eine erste Ausführungsform 100 der Detektionseinrichtung dargestellt.

Die Detektionseinrichtung 100 umfaßt ein Photohalbleiterfeld 110, eine Ausleseeinrichtung 120 und eine Verstärkereinrichtung 130.

Das Photohalbleiterfeld 110 weist eine Mehrzahl von Photohalbleitereinrichtungen A, B und C zur Konvertierung von Licht, das auf die jeweilige Photohalbleitereinrichtung auftrifft, in Ladungen auf. Als Photohalbleitereinrichtung lassen sich alle bekannten Photohalbleitereinrichtung, wie beispielsweise Photodioden, CCD-Strukturen oder dergleichen einsetzen. Die in jeder der Photohalbleitereinrichtungen erzeugten Ladungen können jeweils über einen Ausgang einer jeden Photohalbleitereinrichtung durch die Ausleseeinrichtung 120 ausgelesen werden.

Die Größe der Photohalbleitereinrichtungen kann entsprechend der jeweiligen Meßanordnung angepaßt werden. Soll auf die Detektoreinrichtung beispielsweise der Spalt eines Monochromators abgebildet werden, ist es zweckmäßig, die Höhe aller Photohalbleitereinrichtungen A, B und C entsprechend der Höhe des Bildes des Spaltes, der auf die Detektoreinrichtung projiziert werden soll, auszubilden. Da in einer derartigen Ausführung in Höhenrichtung jeweils der gesamte Detektor bestrahlt wird, ergibt sich in Höhenrichtung ein optimales Signal/Rauschverhältnis. Die Breite der Photohalbleitereinrichtungen richtet sich zweckmäßigerweise ebenfalls nach den zu erwartenden Breiten des auf die Detektoreinrichtung projizierten Bildes des Spaltes.

Die Ausleseeinrichtung 120 der Detektoreinrichtung 100 ist mit Eingängen 121 versehen. Hierbei ist jedem Eingang eine der Photohalbleitereinrichtungen A, B bzw. C zugeordnet. Die Eingänge 121 sind in geeigneter Weise mit den jeweiligen Photohalbleitereinrichtungen A, B bzw. C verbunden. Weiterhin umfaßt die Ausleseeinrichtung 120 einen Ausgang 122, an dem elektrische Signale, die den von der Ausleseeinrichtung ausgelesenen Ladungen entsprechen, ausgegeben werden.

Die Ausleseeinrichtung 120 weist weiterhin eine Schaltereinrichtung 123 mit drei Schaltern 124 auf. In der Ausleseeinrichtung 120 ist jeder Schalter 124 zwischen einem der Eingänge 121 der Ausleseeinrichtung 120 und dem Ausgang 122 der Ausleseeinrichtung vorgesehen.

Die Schalter 124 sind durch elektrische Signale betätigbar. Entsprechend Fig. 1 ist zur Betätigung der Schalter eine Decodereinrichtung 125 vorgesehen, die als Antwort auf zwei Auswahlsignale SEL1 und SEL2 die Schalter 124 steuert. Alternativ zur Decodereinrichtung 125 können die Schalter 124 allerdings auch durch entsprechende elektrische Signal direkt angesteuert werden.

Wie aus Fig. 1 ersichtlich, können durch entsprechendes Schließen der Schalter 124 beliebige Kombinationen der Photohalbleitereinrichtungen A, B und C mit dem Ausgang der Ausleseeinrichtung verbunden werden. Ist eine derartige Verbindung mit dem Ausgang 122 hergestellt, werden die in den entsprechenden Photohalbleitereinrichtungen erzeugten Ladungen in Form eines elektrischen Signals an den Ausgang 122 der Ausleseeinrichtung 120 gegeben.

Insbesondere lassen sich somit durch entsprechende Stellung der Schalter 124 durch die Ausleseeinrichtung die zusammenhängenden Bereiche A, B, C, A und B, sowie A und C auslesen, wobei jeweils die Bereiche B und C, A und C, A und B, C, bzw. B jeweils unberücksichtigt bleiben. Insgesamt kann somit, wenn lediglich ein Teil der Detektorfläche zur Detektion einer Strahlung benötigt wird, das Signal/Rauschverhältnis der Detektoreinrichtung verbessert werden.

Der Ausgang 122 der Ausleseeinrichtung ist mit dem Eingang eine Verstärkereinrichtung 130 verbunden. Diese Verstärkereinrichtung umfaßt einen Operationsverstärker 131 und eine parallel zu dem Operationsverstärker geschaltete variable Kapazität 132.

Entsprechend Fig. 1 ist die variable Kapazität aus parallel zueinander geschalteten Reihen von jeweils einem Kondensator 133 und einem Schalter 134 aufgebaut. Die Kapazität der variablen Kapazität läßt sich auf einfache Weise durch Betätigung der Schalter 134 ändern. Hierzu ist eine weitere Decodereinrichtung 135, welche die Schalter als Antwort auf Auswahlsignale SEL1, SEL2 und SEL3 hin steuert, vorgesehen. Alternativ zu der Decodereinrichtung 135 lassen sich die Schalter selbstverständlich auch durch entsprechend zugeführte Signale direkt steuern.

Der Operationsverstärker 131 und die variable Kapazität 132 stellen in der in Fig. 1 gezeigten Schaltung einen Stromintegrator dar, der das Stromssignal, das durch die Ausleseschaltung 120 geliefert wird, zu einer Spannung, die am Ausgang der Verstärkereinrichtung 130 abgegriffen werden kann, aufintegriert. Diese Ausgangsspannung ist proportional zu der in den Photohalbleitereinrichtungen, die durch die Schaltereinrichtung mit dem Ausgang 122 der Ausleseeinrichtung verbunden sind, erzeugten Ladung.

Weiterhin ist gemäß Fig. 1 ein Schalter 136 parallel zu den Reihen aus jeweils einem Kondensator und einem Schalter vorgesehen. Durch diesen Schalter kann die Integrator-Schaltung auf einfache Weise zurückgesetzt werden. Dieser Schalter 136 kann ebenfalls durch die Decodereinrichtung oder alternativ durch ein direkt angelegtes elektrisches Signal gesteuert werden.

Durch Ändern der Kapazität kann auf einfache Weise der Empfindlichkeitsbereich der Detektoreinrichtung gewählt werden und somit in Abhängigkeit von dem Meßsignal das günstigste Signal/Rauschverhältnis für die Detektoreinrichtung eingestellt werden.

Die Werte der Kondensatoren der variablen Kapazität 132 werden zweckmäßigerweise in Abhängigkeit von dem zu erwartenden Meßbereich ausgewählt. Um beispielsweise einen möglichst universellen Einsatz des Detektors in verschiedenen Atomabsorptionsverfahren zu ermöglichen, können in der variablen Kapazität 132 sieben Kondensatoren mit den Werten 0,1 pF, 0,4 pF, 1 pF, 2,5 pF, 7pF, 12 pF und 20 pF gewählt werden. Durch diese Wahl lassen sich Kapazitäten in dem Bereich von 0,1 - 32 pF zuschalten. Berücksichtigt man die Eigendynamik eines Halbleiterdetektors mit 3000, so ergibt sich für die vorliegende Schaltung aus Photohalbleiterfeld und Verstärker ein Dynamikbereich von ungefähr 1×10⁶.

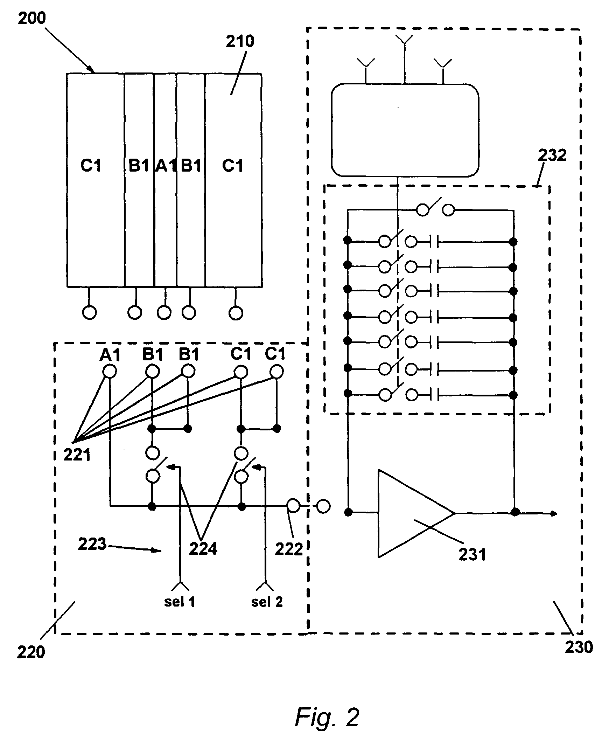

In Fig. 2 ist eine zweite Ausführungsform einer Detektoreinrichtung 200 gemäß der vorliegenden Erfindung dargestellt.

Gegenüber der in Fig. 1 gezeigten Detektoreinrichtung 100 weist die Detektionseinrichtung 200 ein leicht modifiziertes Photohalbleiterfeld 210 und entsprechend angepaßte Eingänge 221 der Ausleseschaltung 220 auf. Im übrigen entsprechen die Detektionseinrichtungen 100 und 200 einander. Im folgenden wird deshalb lediglich auf die oben bezeichnete Modifikation eingegangen und bezüglich der einander entsprechenden Komponenten auf ihre Beschreibung im Zusammenhang mit Fig. 1 verwiesen. Hierzu bleibt anzumerken, daß sich die Bezugszeichen einander entsprechender Elemente nur in ihrer ersten Ziffer voneinander unterscheiden.

Das Photohalbleiterfeld 210 umfaßt im Gegensatz zu dem Photohalbleiterfeld der ersten Ausführungsform eine Photohalbleitereinrichtung A1 sowie jeweils zwei Photohalbleitereinrichtungen B1 und C1. Die zwei Photohalbleitereinrichtungen B1 und die zwei Photohalbleitereinrichtungen C1 sind jeweils identisch ausgebildet. Während die Höhen der Photohalbleitereinrichtungen A1, B1 und C1 gleich sind, unterscheiden sich die Photohalbleitereinrichtungen in ihrer Breite. In bezug zueinander sind die Photohalbleitereinrichtungen B1 und C1 jeweils symmetrisch um die Photohalbleitereinrichtung A1 angeordnet.

Entsprechend dieser symmetrischen Anordnung der Photohalbleitereinrichtungen ist auch die Ausleseeinrichtung 220 gegenüber der in Fig. 1 gezeigten Ausleseeinrichtung 120 modifiziert.

Insbesondere umfaßt die Ausleseeinrichtung 220 fünf Eingänge 221, denen jeweils eine der oben beschriebenen Photohalbleitereinrichtungen zugeordnet ist.

Weiterhin ist die Photohalbleitereinrichtung A1 direkt an den Ausgang 222 der Ausleseeinrichtung 220 angeschlossen. Demnach wird die in der Photohalbleitereinrichtung A1 erzeugte Ladung bei jedem Auslesevorgang ausgelesen. Außerdem sind den zwei Photohalbleitereinrichtungen B1 sowie C1 jeweils ein Schalter 224, die gemäß Fig. 2 durch zwei Auswahlsignale sel1 bzw. sel2 direkt angesteuert werden, zugeordnet.

Durch Schließen des Schalters 224, der den beiden Photohalbleitereinrichtungen B1 zugeordnet ist, werden die Photohalbleitereinrichtungen B1 mit dem Ausgang 222 der Ausleseeinrichtung verbunden. Somit werden in dieser Konfiguration die Ladungen, die in der Photohalbleitereinrichtung A1 und in den beiden Photohalbleitereinrichtungen B1 erzeugt werden, durch die Ausleseeinrichtung 220 ausgelesen und in Form eines elektrischen Signals an den Ausgang 222 gegeben.

Schließt man weiterhin den Schalter 224, der den beiden Photohalbleitereinrichtungen C1 zugeordnet ist, so werden alle Photohalbleitereinrichtungen mit dem Ausgang 222 verbunden. Als Konsequenz werden alle Ladungen, die in den Photohalbleitereinrichtungen A1, B1 und C1 erzeugt werden, ausgelesen und an den Ausgang 222 der Ausleseeinrichtung 220 gegeben.

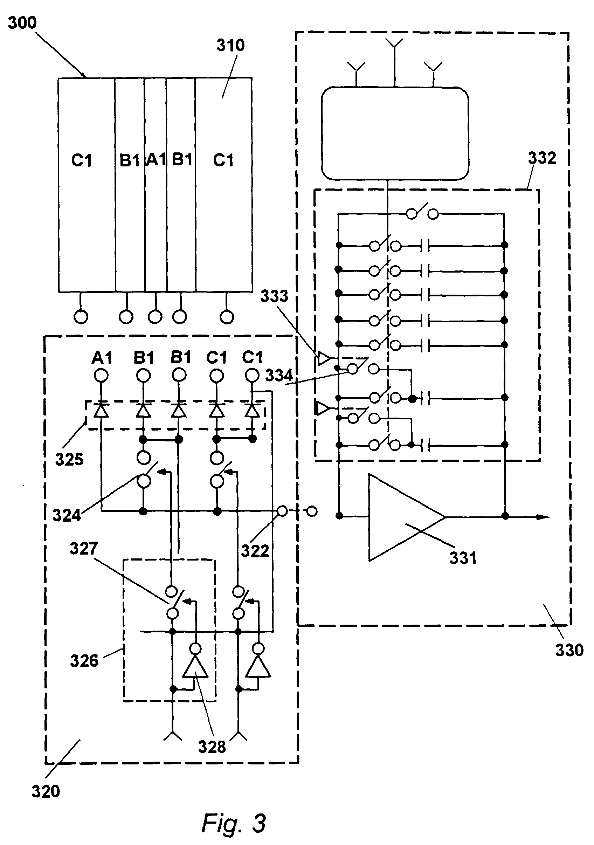

In Fig. 3 ist eine dritte Ausführungsform einer Detektionseinrichtung 300 dargestellt.

Diese Ausführungsform unterscheidet sich gegenüber der in Fig. 2 dargestellten dahingehend, daß in ihrer Ausleseschaltung 320 zusätzlich Strombegrenzungseinrichtungen 325, die in Form von Dioden ausgebildet ist, unmittelbar nach den den entsprechenden Photohalbleitereinrichtungen A1, B1 und C1 zugeordneten Eingängen vorgesehen sind.

Durch diese Strombegrenzungseinrichtungen 325 wird sichergestellt, daß die Ausleseschaltung erst ab einem vorbestimmten Schwellwert beginnt, die Ladungen aus den entsprechenden Photohalbleitereinrichtungen auszulesen.

Weiterhin ist entsprechend Fig. 3 eine Einrichtung 326 vorgesehen, welche alle Photohalbleitereinrichtungen, die aufgrund der Stellung der Schalter 324 nicht an den Ausgang 322 der Ausleseeinrichtung 320 gekoppelt sind, auf ein gemeinsames vorbestimmtes Potential legt.

Entsprechend der in Fig. 3 gezeigten Ausführungsform umfaßt diese Einrichtung 326 Schalter 327 und Inverter 328. Jeder Schalter 327 ist einem der Schalter 324 zugeordnet. Jeder Schalter 327 ist zwischen dem Eingang, der diesem Schalter 324 zugeordnet ist, und dem gemeinsamen Potential vorgesehen.

Jeder Schalter 327 kann gemäß Fig. 3 durch dasselbe Auswahlsignal, das zur Steuerung des ihm zugeordneten Schalters 324 verwendet wird, gesteuert werden. Wenn die Schalter 324 und 327, wie in Fig., 3, vom gleichen Typ sind, also wenn sie beispielsweise durch ein hochpegeliges Signal geöffnet und ein tiefpegeliges Signal geschlossen werden, wird das Auswahlsignal zur Steuerung eines der Schalter 324 bzw. 327 invertiert; im Fall der in Fig. 3 gezeigten Anordnung wird beispielsweise das Auswahlsignal zur Steuerung des Schalters 327 durch einen Inverter 328 invertiert.

Dieser Aufbau führt dazu, daß ein Paar einander zugeordneter Schalter 324 und 327 immer einander entgegengesetzte Schalterstellungen aufweisen, d.h. wenn einer der Schalter 324 und 327 geschlossen ist, ist der andere geöffnet. Demnach wird eine Photohalbleitereinrichtung, die aufgrund eines offenen Schalters 324 nicht an den Ausgang 322 der Ausleseeinrichtung 320 gekoppelt ist, durch den geschlossenen Schalter 327 auf das gemeinsame Potential gelegt. Dadurch wird verhindert, daß eine Photohalbleitereinrichtung, aus der keine Ladungen ausgelesen werden sollen, Signale auf den Ausgang 322 der Ausleseschaltung gibt.

Außerdem sind gemäß Fig. 3 gegenüber der in Fig. 2 gezeigten Detektoreinrichtung in der variablen Kapazität 322 externe Anschlüsse 333 vorgesehen.

Die Strombegrenzungseinrichtungen 325, die Einrichtungen 326 sowie die externen Anschlüsse 333 in dieser Ausführungsform sind offensichtlich von einander unabhängige bevorzugte Ausführungen der Detektoreinrichtung. Demnach können diese drei bevorzugten Ausbildungen einzeln oder in beliebiger Kombination miteinander eingesetzt werden.

Die übrigen Elemente der in Fig. 3 gezeigten Ausführungsform entsprechen den in Fig. 1 bzw. Fig. 2 gezeigten Elementen. Zur detaillierten Beschreibung dieser Elemente kann deshalb auf die entsprechende Beschreibung im Zusammenhang mit diesen Figuren verwiesen werden. Hierbei bleibt wiederum anzumerken, daß sich Bezugszeichen der entsprechenden Elemente lediglich in ihrer ersten Ziffer voneinander unterscheiden.

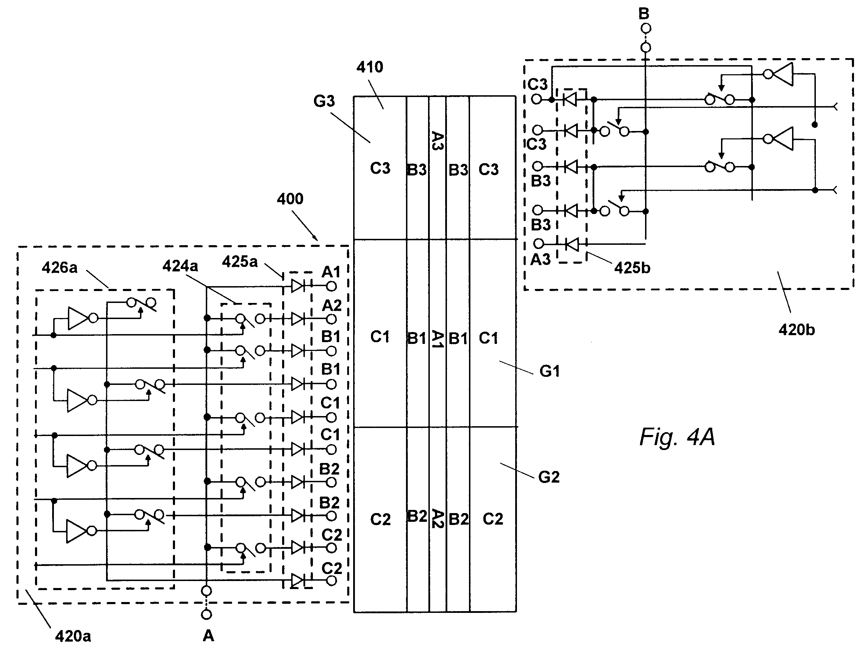

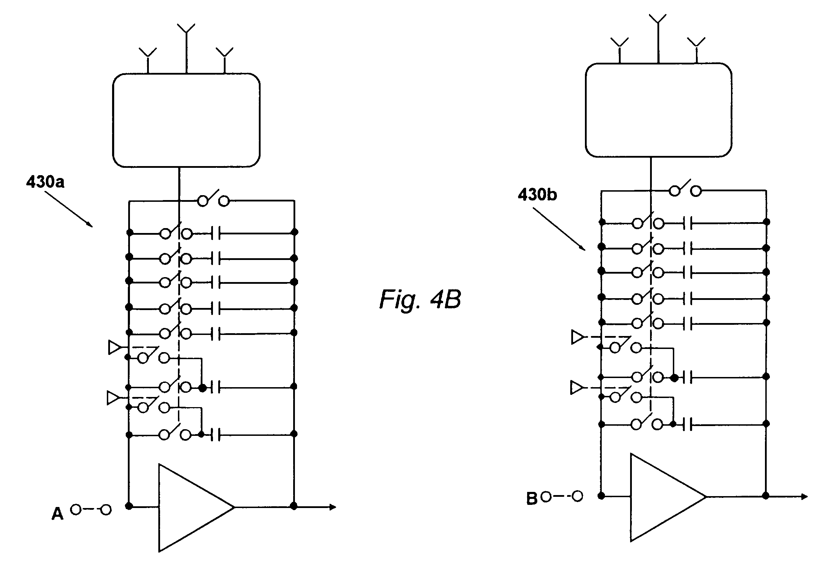

In Fig. 4A und Fig. 4B ist eine weitere Ausführungsform einer Detektoreinrichtung 400 gezeigt. Diese Detektoreinrichtung kann insbesondere als Universaldetektor für eine Vielzahl von Anwendungen in der Atomabsortionsspektroskopie eingesetzt werden.

Diese Detektoreinrichtung 400 umfaßt ein Photohalbleiterfeld 410 mit fünfzehn Photohalbleitereinrichtungen. Diese Photohalbleitereinrichtungen sind in Form von drei Gruppen G1, G2 und G3 mit jeweils fünf Photohalbleitereinrichtungen A1, B1 und C1, A2, B2 und C2, bzw. A3, B3 und C3 vorgesehen.

Die einzelnen Gruppen der Photohalbleitereinrichtungen sind analog zu dem in Fig. 2 gezeigten Photohalbleiterfeld aufgebaut. Demnach ist jeweils eine Photohalbleitereinrichtung A1, A2 bzw., A3 vorgesehen, um die jeweils zwei Photohalbleitereinrichtungen B1, B2 bzw. B3 und zwei weitere Photohalbleitereinrichtungen C1, C2 bzw. C3 symmetrisch angeordnet sind.

Für die erste und die zweite Gruppe ist eine erste Ausleseeinrichtung 420a und für die dritte Gruppe ist eine zweite Ausleseeinrichtung 420b vorgesehen. Weiterhin sind entsprechend eine erste Verstärkereinrichtung 430a und eine zweite Verstärkereinrichtung 430b vorgesehen.

Die Ausleseeinrichtung 420a entspricht der Ausleseeinrichtung 320 aus Fig. 3, wobei entsprechend der zusätzlichen Photohalbleitereinrichtungen A2, B2 und C2 zusätzliche Elemente 424a, 425a und 426a vorgesehen sind.

Die Ausleseeinrichtung 420b entspricht der Ausleseeinrichtung 320 in Fig. 3.

Ebenso sind die Verstärkereinrichtungen 430a und 430b, abgesehen von den im Zusammenhang mit Fig. 3 erläuterten externen Anschlüssen, mit der Verstärkereinrichtung 130 identisch. Zur Beschreibung dieser Schaltungen kann daher auf die entsprechende Beschreibung von Fig. 1 und Fig. 3 verwiesen werden.

Die in Fig. 4A dargestellte Anordnung der Photohalbleitereinrichtungen in dem Detektorfeld 410 ermöglicht einen universellen Einsatz der Detektionseinrichtung in einer Vielzahl verschiedener Anwendungen in der Atomabsorptionsspektroskopie.

So können beispielsweise durch Auslesen aus den Gruppen G1 und G3 zwei Strahlen, die verschiedene Lichtwege durchlaufen haben, mit der Detektionseinrichtung gleichzeitig gemessen und anschließend ausgewertet werden.

Außerdem kann bei Verwendung eines Spaltmonochromators durch wahlweises Auslesen aus den Gruppen G1, G2 oder G1 und G2 die Höhe des auf das Photohalbleiterfeld abgebildeten Spalts eingestellt werden. Somit ist es beispielsweise möglich, durch die Ausleseeinrichtung die Spalthöhe an das jeweils verwendete Atomabsorptionsverfahren anzupassen.

Weiterhin kann für jede Gruppe durch Auswahl der entsprechenden Photohalbleitereinrichtungen, wie dies bereits im Zusammenhang mit Fig. 2 erläutert worden ist, die Breite des zum Nachweis verwendeten Photohalbleiterfeldes einfach eingestellt werden.

## Patentansprüche

1. Photoelektrische Detektoreinrichtung (100; 200; 300; 400) zur Verwendung in der Atomabsorptionsspektroskopie,
**gekennzeichnet durch**
ein Photohalbleiterfeld (110; 210; 310; 410) mit einer Mehrzahl von Photohalbleitereinrichtungen (A, B, C; A1, B1, C1; A1, B1, C1, A2, B2, C2, A3, B3, C3) und
eine Ausleseeinrichtung (120; 220; 320; 420a, 420b) zum gemeinsamen Auslesen der in den Photohalbleitereinrichtungen eines beliebigen zusammenhängenden Bereichs im Photohalbleiterfeld durch Auftreffen von Strahlung erzeugten Ladungen sowie zum Erzeugen elektrischer, den ausgelesenen Ladungen entsprechender Signale.

2. Detektoreinrichtung nach Anspruch 1, in welcher die Ausleseeinrichtung aufweist:
eine Mehrzahl von Eingängen (121; 221), die jeweils einer Photohalbleitereinrichtung des Photohalbleiterfeldes zugeordnet sind,
einen Ausgang (122; 222) für die erzeugten, den ausgelesenen Ladungen entsprechenden elektrischen Signale,
eine Schaltereinrichtung (123; 223) mit wenigstens einem Schalter (124; 224), der wenigstens einem Eingang zugeordnet ist, wobei jeder Schalter (124; 224) nach jedem ihm zugeordneten Eingang vorgesehen ist, und durch jeden Schalter (124; 224) jeder ihm zugeordnete Eingang an den Ausgang der Ausleseeinrichtung koppelbar ist.

3. Detektoreinrichtung nach Anspruch 2, in welcher ein Schalter (224; 424a, 424b) mehreren Eingängen (B1, C1; B1, C1, B2, C2, B3, C3) zugeordnet ist.

4. Detektoreinrichtung nach Anspruch 2 oder 3, in welcher jeder Schalter (124; 224) der Schaltereinrichtung (123; 223) elektrisch betätigbar ist.

5. Detektoreinrichtung nach einem der Ansprüche 2 bis 4, in welcher jedem Schalter (324) zusätzlich eine Einrichtung (326) zugeordnet ist, die alle nicht an den Ausgang der Ausleseeinrichtung (320) gekoppelten Photohalbleitereinrichtungen auf ein vorbestimmtes Potential legt.

6. Detektoreinrichtung nach Anspruch 5, in welcher jede einem Schalter (324) zugeordnete Einrichtung (326) einen weiteren Schalter (327) aufweist, der zwischen dem dem Schalter (324) zugeordneten Eingang und dem vorbestimmten Potential so vorgesehen ist, daß er den Eingang, wenn er nicht an den Ausgang der Ausleseeinrichtung gekoppelt ist, an das vorbestimmte Potential koppelt.

7. Detektoreinrichtung nach Anspruch 6 in Verbindung mit Anspruch 4, in welcher jeder Schalter (324) und jeder diesem zugeordnete weitere Schalter (327) durch ein elektrisches Signal, das dem Schalter (324) unmittelbar und dem Schalter (327) über einen Inverter (328) zugeführt wird, betätigbar sind.

8. Detektoreinrichtung nach einem der Ansprüche 4 bis 7, in welcher eine Decodereinrichtung (125) vorgesehen ist, die als Anwort auf digitale Auswahlsignale (SEL1, SEL2) den oder die Schalter (124) betätigt.

9. Detektoreinrichtung nach einem der Ansprüche 2 bis 8, in welcher unmittelbar nach jedem Eingang der Ausleseeinrichtung eine Strombegrenzungseinrichtung (325; 425a, 425b) vorgesehen ist.

10. Detektoreinrichtung nach Anspruch 9, in welcher die Strombegrenzungseinrichtung in Form einer Diode vorgesehen ist.

11. Detektoreinrichtung nach einem der vorangegangenen Ansprüche, in welcher zur Verstärkung der elektrischen Ausgangssignale der Ausleseeinrichtung eine Verstärkereinrichtung (130; 230; 330; 430a, 430b) vorgesehen ist, umfassend
einen Operationsverstärker (131; 231; 331), und
eine parallel zu dem Verstärker geschaltete variable Kapazität (132; 232; 332).

12. Detektoreinrichtung nach Anspruch 11, in welcher die variable Kapazität (132; 232; 332) eine Mehrzahl von parallel geschalteten Reihen aus jeweils einem Kondensator (133) und einem Schalter (134) umfaßt, und die Kapazität durch Betätigung wenigstens eines der Schalter (134) veränderbar ist.

13. Detektoreinrichtung nach Anspruch 12, in welcher ein Schalter (136) parallel zu den Reihen aus jeweils einem Kondensator und einem Schalter vorgesehen ist.

14. Detektoreinrichtung nach einem der Ansprüche 12 oder 13, in welcher eine Decodereinrichtung (135) vorgesehen ist, die als Anwort auf digitale Auswahlsignale (SEL1, SEL2, SEL3) die Schalter (134) betätigt.

15. Detektoreinrichtung nach einem der vorangegangenen Ansprüche, in welcher die Photohalbleitereinrichtungen (A, B, C; A1, B1, C1; A1, B1, C1, A2, B2, C2, A3, B3, C3) und in Form von Photodioden vorgesehen sind.
